# EUROPÄISCHE PATENTSCHRIFT

(11) **EP 1 015 509 B1**
(45) Veröffentlichungstag und Bekanntmachung des Hinweises auf die Patenterteilung: **20.06.2001**
(21) Anmeldenummer: 98951309.8
(22) Anmeldetag: 21.08.1998
(51) Int. Cl.: C08G 65/20, C08G 65/10, B01J 21/16

(54) **VERBESSERTES VERFAHREN ZUR HERSTELLUNG VON POLYTETRAHYDROFURAN**
IMPROVED METHOD FOR PRODUCING POLYTETRAHYDROFURAN
PROCEDE AMELIORE DE PREPARATION DE POLYTETRAHYDROFURANE

(30) Priorität: 05.09.1997 DE 19738863; 16.01.1998 DE 19801419
(43) Veröffentlichungstag der Anmeldung: 05.07.2000
(73) Patentinhaber: BASF AKTIENGESELLSCHAFT, 67056 Ludwigshafen (DE)
(72) Erfinder: ELLER, Karsten, D-67061 Ludwigshafen (DE); HESSE, Michael, D-67549 Worms (DE); BECKER, Rainer, D-67098 Bad Dürkheim (DE); HÖHN, Arthur, D-67281 Kirchheim (DE); RÜTTER, Heinz, D-67126 Hochdorf-Assenheim (DE)
(86) Internationale Anmeldenummer: EP9805331
(87) Internationale Veröffentlichungsnummer: WO9912992

(56) Entgegenhaltungen:
- EP-A- 0 250 168
- DE-B- 1 226 560
- US-A- 4 235 751
- US-A- 4 329 445
- US-A- 5 262 562

## Beschreibung

Die vorliegende Erfindung betrifft ein verbessertes Verfahren zur Herstellung von Polytetrahydrofuran, Polytetrahydrofuran-Copolymeren, Diestern oder Monoestern dieser Polymere durch die Polymerisation von Tetrahydrofuran in Gegenwart mindestens eines Telogens und/oder Comonomers an einem Hectorit als Polymerisationskatalysator.

Polytetrahydrofuran ("PTHF"), auch Polyoxybutylenglykol genannt, ist in der Kunststoff- und Kunstfaserindustrie ein vielseitiges Zwischenprodukt und dient unter anderem zur Herstellung von Polyurethan-, Polyester- und Polyamid-Elastomeren, zu deren Herstellung es als Diolkomponente eingesetzt wird. Daneben ist es wie auch manche seiner Derivate in vielen Anwendungsfällen ein wertvoller Hilfsstoff, so zum Beispiel als Dispergiermittel oder etwa beim Entfärben ("Deinken") von Altpapier.

PTHF wird technisch vorteilhafterweise hergestellt durch Polymerisation von Tetrahydrofuran an geeigneten Katalysatoren in Gegenwart von Reagentien, deren Zugabe die Steuerung der Kettenlänge der Polymerketten und so die Einstellung des mittleren Molekulargewichts auf den gewünschten Wert ermöglicht (Kettenabbruchreagentien oder "Telogene"). Die Steuerung erfolgt dabei durch Wahl von Art und Menge des Telogens. Durch Wahl geeigneter Telogene können zusätzlich funktionelle Gruppen an ein Ende oder beide Enden der Polymerkette eingeführt werden. So können zum Beispiel durch Verwendung von Carbonsäuren oder Carbonsäureanhydriden als Telogene die Mono- oder Diester des PTHFs hergestellt werden.

Andere Telogene wirken nicht nur als Kettenabbruchreagenzien, sondern werden auch in die wachsende Polymerisatkette des PTHFs eingebaut, haben also nicht nur die Funktion eines Telogens, sondern auch die eines Comonomers und können daher mit gleicher Berechtigung als Telogen oder als Comonomer bezeichnet werden. Beispiele für solche Comonomere sind Telogene mit zwei Hydroxygruppen wie Dialkohole. Beispiele für solche Dialkohole sind Ethylenglykol, Butylenglykol, 1,4-Butandiol, 1,6-Hexandiol oder niedermolekulares PTHF. Weiterhin sind als Comonomere 1,2-Alkylenoxide, wie zum Beispiel Ethylenoxid oder Propylenoxid, 2-Methyltetrahydrofuran oder 3-Methyltetrahydrofuran geeignet. Die Verwendung solcher Comonomere, mit Ausnahme von Wasser, 1,4-Butandiol und niedermolekularem PTHF, führt zur Herstellung von Tetrahydrofuran-Copolymeren. Auf diese Weise kann das PTHF chemisch modifiziert werden. Ein Beispiel dafür ist die Verwendung des Telogens 2-Butin-1,4-diol, dessen Zugabe zum Vorhandensein eines Anteils an C≡C-Dreifachbindungen in den Polymerketten des PTHF's führt. Derartig modifiziertes PTHF kann durch die Reaktivität dieser Dreifachbindungen an diesen Stellen chemisch weiter veredelt werden, zum Beispiel durch Hydrierung der Dreifach- zu Doppelbindungen, durch anschließende Anpolymerisation anderer Monomere ("Propfen") zur Einstellung der Eigenschaften des Polymers, Vernetzung zur Bildung von Polymeren mit vergleichsweise starrer Struktur, oder andere gängige Maßnahmen der Polymerchemie. Die komplette Hydrierung der vorhandenen Dreifachbindungen ist ebenfalls möglich und führt im allgemeinen zu PTHF mit einer besonders niedrigen Farbzahl.

Wie umfangreiche Untersuchungen ergeben haben, sind für die Polymerisation von THF in technischem wirtschaftlichem Maßstab saure Katalysatoren geeignet, die allerdings die nachteilige Wirkung haben, daß Polymerisate mit gelb bis bräunlichen Verfärbungen erhalten werden. Die Verfärbungen nehmen mit der Temperatur bei der Polymerisation und mit steigendem Umsatz zu.

So ist aus der PCT/WO 94/05719 ein Verfahren zur Herstellung von Polytetrahydrofurandiestern bekannt, bei dem die Polymerisation des THF an säureaktiviertem Kaolin, Zeolithen oder amorphen Aluminiumsilikaten durchgeführt wird.

Die DE-A 19 513 493 lehrt ein Verfahren zur Herstellung von Polytetrahydrofuranestern durch die Polymerisation von Tetrahydrofuran in Gegenwart von Carbonsäureanhydrid an einem säureaktivierten Attapulgiten als Polymerisationskatalysator. Die mit den aus der PCT/WO 94/05719 und der DE-A 19 513 493 bekannten Katalysatoren erzielbaren Umsätze sind jedoch nur gering. Die DE-A 12 26 560 beschreibt ein Verfahren zur Herstellung von Polytetrahydrofurandiestern an sauren Montmorilloniten in Gegenwart von Acetanhydrid. Mit den sauren Montmorilloniten lassen sich zwar höhere Umsätze erzielen, die Farbzahl der Polymerisate ist jedoch entsprechend höher.

Die Reinheit des PTHF hängt auch von der Qualität des eingesetzten THF ab.

Die technische Qualität enthält geringe Mengen an Verunreinigungen in einer Konzentration von 10 bis 500 ppm. Die chemische Natur dieser Verunreinigungen ist nicht in allen Einzelheiten bekannt. Obwohl dieses THF von sehr hoher Reinheit ist - es hat normalerweise einen Reinheitsgrad von 99,9 % - verursachen bereits Spuren an Verunreinigungen bei der Polymerisation die oben genannten Verfärbungen. Darüber hinaus beobachtet man gleichzeitig mit der Verfärbung eine veränderte Reaktionsfähigkeit bei der Herstellung von Polyestern oder Polyurethanen aus den Polytetramethylenetherglykolen. Dies sind gravierende Mängel, denn Farbe und reproduzierbare Verarbeitung gehören zu den wichtigsten Eigenschaften eines Polymerisates, das technische Anwendung finden soll.

Es sind deshalb zahlreiche Verfahren für die Behandlung von technischem THF zum Zwecke der Qualitätsverbesserung vorgeschlagen worden. So wird z.B. in der DE-A-2 801 792 ein Verfahren beschrieben, bei dem man THF vor der Polymerisation mit Bleicherden behandelt. Man erhält dabei zwar Polymerisate mit verbesserter Farbzahl, jedoch läßt sich diese Behandlungsmethode nicht in jedem Fall reproduzierbar auf jede verfügbare technische Qualität des THF anwenden.

Weiterhin sind Verfahren bekannt, die der Entfärbung der an sauren heterogenen Katalysatoren erhaltenen Polymerisate nach Abschluß der Polymerisation in einem gesonderten Entfärbungsverfahren dienen.

Nach den Angaben der EP-A 61 668 stellt man Polytetramethyletherglykol oder -glykoldiester mit geringer Farbzahl dadurch her, daß man die durch kationische Polymerisation von THF erhaltenen Polymerisate in Gegenwart eines Hydrierkatalysators einer Behandlung mit Wasserstoff unterwirft. Verwendet man bei der Polymerisation eine THF-Qualität, wie sie der Markt anbietet, so ist man gezwungen, die hydrierende Entfärbung bei sehr hohen Wasserstoffdrücken von z.B. 50 bis 300 bar durchzuführen.

Es bestand daher die Aufgabe, nach einem Verfahren zur Herstellung von Polytetrahydrofuran, Tetrahydrofuran-Copolymeren, Diestern und Monoestern dieser Polymere zu suchen, mit dem einfach und wirtschaftlich Polymerisate und Copolymerisate des THF mit niedriger Farbzahl hergestellt werden können. Da die Wirtschaftlichkeit eines heterogenen katalysierten PTHF-Verfahrens entscheidend von der Produktivität des Katalysators abhängt, ist es auch Aufgabe der vorliegenden Erfindung, die Katalysatoraktivität gegenüber den bekannten Katalysatoren bei gleichzeitig niedriger Farbzahl der Polymere zu steigern.

Es wurde nun ein Verfahren zur Herstellung von Polytetrahydrofuran, Polytetrahydrofuran-Copolymeren, Diestern oder Monoestern dieser Polymere durch Polymerisation von Tetrahydrofuran in Gegenwart mindestens eines Telogens und/oder Comonomers an einem heterogenen Katalysator gefunden, das dadurch gekennzeichnet ist, daß als Katalysator Hectorit verwendet wird, das die bestehende Aufgabe löst.

Hectorit gehört zu den Tonen, insbesondere zur Klasse der Smectite. In dem erfindungsgemäßen Verfahren kann natürlich vorkommender oder synthetischer Hectorit eingesetzt werden, wobei die Verwendung synthetischen Hectorits bevorzugt ist. Durch Ersatz der Hydroxylgruppen gegen Fluor werden Fluorhectorite erhalten, die ebenfalls als synthetische Hectorite in dem erfindungsgemäßen Verfahren verwendet werden können. Synthetische Smectite werden z.B. in der GB-A 2 164 636 beschrieben und synthetische Hectorite werden beispielsweise unter der Handelsbezeichnung Laponit®RD von der Firma Laporte, (Laponite Technical Bulletin L 104/90/A) vertrieben. Synthetische Hectorite können bedingt durch ihre Herstellung wechselnde Wassermengen enthalten. Durch Trocknung verlieren Hectorite das absorbierte Wasser. Durch die Kalzinierung wird auch Wasser durch Dehydroxylierzung freigesetzt. Die erfindungsgemäß verwendeten Hectorite weisen bevorzugt einen Alkaligehalt von weniger als 1 Gew.-% Alkalimetallionen auf.

Vorzugsweise verwendet man im wesentlichen wasserfreie Hectorite, die man aus den handelsüblichen wasserhaltigen Hectoriten durch Trocknen bei Temperaturen von 80°C bis 200°C, bevorzugt von 100°C bis 150°C für 1 Stunde bis 20 Stunden bei Normaldruck erhält. Es kann jedoch ebenso bei reduziertem Druck und niedrigen Temperaturen getrocknet werden. Die getrockneten Hectorite können zusätzlich bei 200°C bis 500°C für einen Zeitraum von 0,5 Stunden bis 12 Stunden, bevorzugt für 1 Stunde bis 5 Stunden, kalziniert werden.

Die in dem erfindungsgemäßen Verfahren verwendeten Hectorite werden bevorzugt durch Säurebehandlung, bevorzugt mit Mineralsäuren wie z.B. Salzsäure, Schwefelsäure, Salpetersäure oder Phosphorsäure, besonders bevorzugt Schwefelsäure und/oder Salzsäure, oder mit organischen Säuren wie Ameisensäure oder Zitronensäure vor ihrer Verwendung aktiviert.

Für die Säureaktivierung, die beispielsweise von Komadel et al., Clays and Clay Min. 44 (1996), 228 - 236 beschrieben wird, wird der Hectorit in Pulverform in der jeweiligen Säure suspendiert, wobei der Feststoffgehalt der Suspension zwischen 1 und 50 Gew.-% betragen kann. Unter Rühren wird die Suspension bei 30°C bis 120°C, bevorzugt 50°C bis 110°C 0,5 Stunden bis 24 Stunden, bevorzugt 1 Stunde bis 12 Stunden lang, umgesetzt. Anschließend wird der auf diese Weise säureaktivierte Hectorit abgetrennt, mit Wasser gewaschen und wie vorstehend beschrieben getrocknet und gegebenenfalls kalziniert.

Der Hectorit kann in Form von Pulver, beispielsweise bei der Durchführung des Verfahrens in Suspensionsfahrweise, oder zweckmäßigerweise als Formkörper, z.B. in Form von Zylindern, Kugeln, Ringen oder Splitt, insbesondere bei einer Festbettanordnung des Katalysators, welche bei Verwendung von z.B. Schlaufenreaktoren oder beim kontinuierlichen Betrieb des Verfahrens bevorzugt ist, im erfindungsgemäßen Verfahren eingesetzt werden.

Als Telogen, d.h. als Substanz, die den Kettenabbruch der Polymerisationsreaktion bewirkt, eignen sich bei der Herstellung von PTHF-Diestern Carbonsäureanhydride, die von C₂- bis C₂₀-Monocarbonsäuren abgeleitet sind, beispielsweise Acetanhydrid, Propionsäureanhydrid und Buttersäureanhydrid. Die bei Verwendung dieser Telogenen entstehenden PTHF-Diester lassen sich mit verschiedenen Verfahren in PTHF überführen (z.B. nach US 4 460 796).

Als Telogen zur Herstellung der PTHF-Monoester von Monocarbonsäuren dienen im allgemeinen C₁- bis C₂₀-Monocarbonsäuren, vorzugsweise C₁- bis C₈-Monocarbonsäuren, und besonders bevorzugt Ameisensäure, Essigsäure, Propionsäure, 2-Ethylhexansäure, Acrylsäure und Methacrylsäure.

Als Telogen zur Herstellung von Copolymeren des THFs eignet sich 1,4-Butindiol. Das resultierende Copolymer läßt sich anschließend durch Hydrierung der Dreifachbindungen in PTHF umwandeln, zeigt aber auch als solches interessante Eigenschaften.

Andere Copolymere von THF lassen sich durch die Verwendung von 1,2-Alkylenoxiden, bevorzugt Ethylenoxid oder Propylenoxid, 2-Methyltetrahydrofuran, 3-Methyltetrahydrofuran oder Diolen wie Ethylenglykol oder 1,6-Hexandiol erhalten.

Bei Verwendung der Telogene Wasser und/oder 1,4-Butandiol erhält man nach dem erfindungsgemäßen Verfahren PTHF in einem Schritt. Gewünschtenfalls kann auch niedermolekulares, offenkettiges PTHF eines Molekulargewichts von 200 bis 700 Dalton als Telogen in die Polymerisationsreaktion zurückgeführt werden, wo es in höhermolekulares PTHF umgewandelt wird. Da 1,4-Butandiol und niedermolekulares PTHF zwei Hydroxygruppen haben, werden sie nicht nur als Telogen an den Kettenenden der PTHF-Kette, sondern auch in die PTHF-Kette als Monomer eingebaut.

Das Telogen wird zweckmäßigerweise gelöst im THF der Polymerisation zugeführt. Da das Telogen den Abbruch der Polymerisation bewirkt, läßt sich über die eingesetzte Telogenmenge das mittlere Molekulargewicht des PTHF oder PTHF-Diesters steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF bzw. die betreffenden PTHF-Derivate mit mittleren Molekulargewichten von 250 bis 10000 gezielt hergestellt werden. Vorzugsweise werden mit dem erfindungsgemäßen Verfahren PTHF bzw. die betreffenden PTHF-Derivate mit mittleren Molekulargewichten von 500 bis 10000 Dalton, besonders bevorzugt von 650 bis 5000 Dalton hergestellt.

Die Polymerisation wird im allgemeinen bei Temperaturen von 0 bis 80°C, vorzugsweise von 25°C bis zur Siedetemperatur des THFs, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden.

Zur Vermeidung der Bildung von Etherperoxiden wird die Polymerisation vorteilhaft unter einer Inertgasatmosphäre vollzogen. Als Inertgase können z.B. Stickstoff, Wasserstoff, Kohlendioxid oder die Edelgase dienen, bevorzugt wird Stickstoff verwendet.

Besonders vorteilhaft ist die Ausführung der Polymerisation unter einer Wasserstoffatmosphäre. Diese Ausführungsform bewirkt eine besonders niedrige Farbzahl der entstehenden Polymerisate. Der Wasserstoffpartialdruck kann dabei zwischen 0,1 und 50 bar gewählt werden. Durch Dotierung des Katalysators mit Übergangsmetallen der Gruppen 7 bis 10 des Periodensystems, beispielsweise mit Ruthenium, Rhenium, Nickel, Eisen, Kobalt, Palladium und/oder Platin, kann bei einer Durchführung der Polymerisation in Gegenwart von Wasserstoff die Farbzahl noch weiter verbessert werden.

Das erfindungsgemäße Verfahren kann diskontinuierlich oder kontinuierlich betrieben werden, wobei aus wirtschaftlichen Gründen in der Regel die kontinuierliche Betriebsweise bevorzugt wird.

Bei der diskontinuierlichen Betriebsweise werden die Reaktanden THF, das betreffende Telogen und/oder Comonomer und der Katalysator im allgemeinen in einem Rührkessel oder Schlaufenreaktor bei den angegebenen Temperaturen solange umgesetzt, bis der gewünschte Umsatz des THFs erreicht ist. Die Reaktionszeit kann in Abhängigkeit von der zugesetzten Katalysatormenge 0,5 bis 40 Stunden, vorzugsweise 1 bis 30 Stunden, betragen. Die Katalysatoren werden zur Polymerisation im allgemeinen in einer Menge von 1 bis 90 Gew.-%, vorzugsweise 4 bis 70 Gew.-% und besonders bevorzugt von 8 bis 60 Gew.-%, bezogen auf das Gewicht des eingesetzten THFs, zugesetzt.

Zur Aufarbeitung wird der Reaktionsaustrag im Falle der diskontinuierlichen Betriebsweise vom darin befindlichen Katalysator zweckmäßigerweise durch Filtration, Dekantieren oder Zentrifugieren abgetrennt. Der vom Katalysator befreite Polymerisationsaustrag wird im allgemeinen destillativ aufgearbeitet, wobei zweckmäßigerweise nicht umgesetztes THF abdestilliert wird und dann gewünschtenfalls niedermolekulare PTHF-Oligomere vom Polymerisat durch Destillation bei vermindertem Druck abgetrennt werden.

### Beispiele

### Katalysatorherstellung

### Katalysator A

80 g synthetischer Hectorit (Laponit®RD der Firma Laporte der ungefähren Zusammensetzung: Na_{0,46}Mg_{5,46}Li_{0,46}Si₈(OH)₄O₂₀·nH₂O) wurde 2 Stunden lang bei 400°C kalziniert.

### Katalysator B

100 g synthetischer Hectorit (Laponit®RD der Firma Laporte) wurde in 4 1 In H₂SO₄ bei 60°C 6 Stunden lang gerührt. Der säureaktivierte Hectorit wurde sodann abfiltriert, mit 5 1 destilliertem Wasser gewaschen, bei 120°C 3 Stunden lang getrocknet und anschließend bei 200°C 7 Stunden lang kalziniert.

### Katalysator C

Die Herstellung von Katalysator C erfolgte analog der Herstellung von Katalysator B, wobei jedoch die Säureaktivierung bei 100°C durchgeführt wurde.

### Vergleichskatalysator V1 (nach DE-A 1 226 560)

Vergleichskatalysator V1 war ein säureaktivierter Montmorillonit, der von der Firma Südchemie unter der Handelsbezeichnung Tonsil® Optimum 210 FF vertrieben wird.

### Vergleichskatalysator V2 (nach WO 94/05719)

600 g Kaolin (Kaolin TEC 2® der Firma Amberger Kaolinwerke) wurde 1 Stunde bei Raumtemperatur in einer Lösung von 240 g Ammoniumchlorid in 2.160 g destilliertem Wasser gerührt. Das Kaolin wurde sodann abfiltriert, mit Wasser gewaschen, 18 Stunden lang bei 120°C getrocknet und 2 Stunden bei 650°C kalziniert. Abschließend wurde das erkaltete säureaktivierte Kaolin zu Pulver zermahlen.

### Vergleichskatalysator V3 (nach DE-A 19 513 493)

650 g Attapulgit LVM (Floridin® der Firma Chemie-Mineralien AG, Bremen) wurde in einer Lösung von 8,2 g einer 36,5 %igen Salzsäure in 1.491,8 g Wasser 30 Minuten lang gerührt. Sodann wurde der säureaktivierte Attapulgit abdekantiert, mit Wasser gewaschen, 7 Stunden lang bei 120°C getrocknet und 2 Stunden bei 300°C kalziniert.

### Diskontinuierliche THF-Polymerisation

In einem 500 ml Glaskolben wurden 10 g Katalysator in 182 g Tetrahydrofuran und 18 g Acetanhydrid suspendiert und 45 Minuten lang bei 50°C gerührt. Sodann wurde der Katalysator abfiltriert und die Farbzahl des Filtrats nach dem in DIN-Norm 53409 und ASTM-D-1209 beschriebenen Verfahren bestimmt. Anschließend wurde das Filtrat am Rotationsverdampfer eingeengt und das erhaltene Polytetrahydrofurandiacetat wurde zur Umsatzbestimmung ausgewogen. Die bestimmten Farbzahlen und Umsätze sind der folgenden Tabelle 1 zu entnehmen.

**Tabelle 1**

| Katalysator | Umsatz [Gew.-%] | Farbzahl Filtrat [APHA] |
|---|---|---|
| A | 6,0 | 15 |
| B | 10,5 | 15 |
| C | 13,1 | 10 |
| V1 | 8,3 | 25 |
| V2 | 1,5 | 5 |
| V3 | 2,0 | 10 |

Das Ergebnis der durchgeführten Vergleichsversuche zeigt, daß mit den erfindungsgemäß verwendeten Katalysatoren A, B und C niedrigere Farbzahlen bei besseren Umsätzen erzielt werden als mit den Vergleichskatalysatoren V2 und V3. Weiterhin sind die mit den erfindungsgemäßen Katalysatoren A, B und C erhaltenen Farbzahlen bei Umsätzen über 6 Gew.-% deutlich niedriger als mit dem Vergleichskatalysator V1.

## Patentansprüche

1. Verfahren zur Herstellung von Polytetrahydrofuran, Polytetrahydrofuran-Copolymeren, Diestern oder Monoestern dieser Polymere durch die Polymerisation von Tetrahydrofuran in Gegenwart mindestens eines Telogens und/oder Comonomers an einem heterogenen Katalysator, dadurch gekennzeichnet, daß als Katalysator Hectorit verwendet wird.

2. Verfahren nach Anspruch 1, dadurch gekennzeichnet, daß synthetischer Hectorit verwendet wird.

3. Verfahren nach Anspruch 1 oder 2, dadurch gekennzeichnet, daß der Hectorit bei 200°C bis 500°C kalziniert wird.

4. Verfahren nach einem der Ansprüche 1 bis 3, dadurch gekennzeichnet, daß der Hectorit durch eine Säurebehandlung aktiviert wird.

5. Verfahren nach einem der Ansprüche 1 bis 4, dadurch gekennzeichnet, daß man als Telogen und/oder Comonomer Wasser, 1,4-Butandiol, 2-Butin-1,4-diol, Polytetrahydrofuran mit einem Molekulargewicht von 200 bis 700 Dalton, C₁- bis C₂₀-Monocarbonsäuren, Carbonsäureanhydride aus C₂- bis C₂₀-Monocarbonsäuren, 1,2-Alkylenoxide, 2-Methyltetrahydrofuran, 3-Methyltetrahydrofuran, Diole oder Gemische dieser Telogene und/oder Comonomere verwendet.

6. Verfahren nach einem der Ansprüche 1 bis 5, dadurch gekennzeichnet, daß man als Telogen Acetanhydrid verwendet.

7. Verfahren nach den Ansprüchen 1 bis 5, dadurch gekennzeichnet, daß man als Telogen Ameisensäure oder Essigsäure verwendet.

8. Verfahren nach einem der Ansprüche 1 bis 7, dadurch gekennzeichnet, daß der Katalysator mit mindestens einem Übergangsmetall der Gruppen 7 bis 10 des Periodensystems der Elemente dotiert ist.

9. Verfahren nach einem der Ansprüche 1 bis 8, dadurch gekennzeichnet, daß die Polymerisation in Gegenwart von Wasserstoff durchgeführt wird.

## Claims

1. A process for preparing polytetrahydrofuran, polytetrahydrofuran copolymers or diesters or monoesters of these polymers, which comprises polymerizing tetrahydrofuran in the presence of at least one telogen and/or comonomer over a heterogeneous catalyst comprising hectorite.

2. A process as claimed in claim 1, wherein a synthetic hectorite is used.

3. A process as claimed in claim 1 or 2, wherein the hectorite is calcined at from 200°C to 500°C.

4. A process as claimed in any of claims 1 to 3, wherein the hectorite is activated by acid treatment.

5. A process as claimed in any of claims 1 to 4, wherein the telogen and/or comonomer used is water, 1,4-butanediol, 2-butyne-1,4-diol, polytetrahydrofuran having a molecular weight of from 200 to 700 dalton, a C₁-C₂₀-monocarboxylic acid, a C₂-C₂₀-monocarboxylic anhydride, a 1,2-alkylene oxide, 2-methyltetrahydrofuran, 3-methyltetrahydrofuran, a diol or a mixture thereof.

6. A process as claimed in any of claims 1 to 5, wherein the telogen used is acetic anhydride.

7. A process as claimed in any of claims 1 to 5, wherein the telogen used is formic acid or acetic acid.

8. A process as claimed in any of claims 1 to 7, wherein the catalyst is doped with at least one transition metal of groups 7 to 10 of the Periodic Table of the Elements.

9. A process as claimed in any of claims 1 to 8, wherein the polymerization is carried out in the presence of hydrogen.

## Revendications

1. Procédé de préparation du polytétrahydrofuranne, de copolymères de polytétrahydrofuranne, de diesters ou de monoesters de ces polymères par polymérisation du tétrahydrofuranne en présence d'au moins un télogène et/ou un comonomère sur un catalyseur hétérogène, caractérisé en ce que l'on utilise l'hectorite comme catalyseur.

2. Procédé selon la revendication 1, caractérisé en ce que l'on utilise de l'hectorite de synthèse.

3. Procédé selon la revendication 1 ou 2, caractérisé en ce que l'on calcine l'hectorite à une température de 200°C à 500°C.

4. Procédé selon l'une quelconque des revendications 1 à 3, caractérisé en ce que l'hectorite est activée au moyen d'un traitement par un acide.

5. Procédé selon l'une quelconque des revendications 1 à 4, caractérisé en ce que l'on utilise, comme télogène et/ou comme monomère, l'eau, le 1,4-butanediol, le 2-butyn-1,4-diol, le polytétrahydrofuranne ayant une masse moléculaire de 200 à 700 daltons, les acides monocarboxyliques en C₁ à C₂₀, les anhydrides carboxyliques des acides monocarboxyliques en C₂ à C₂₀, les oxydes de 1,2-alkylène, le 2-méthyltétrahydrofuranne, le 3-méthyltétrahydrofuranne, les diols ou mélanges de ces télogènes et/ou comonomères.

6. Procédé selon l'une quelconque des revendications 1 à 5, caractérisé en ce que l'on utilise l'anhydride acétique comme télogène.

7. Procédé selon les revendications 1 à 5, caractérisé en ce que l'on utilise l'acide formique ou l'acide acétique comme télogène.

8. Procédé selon l'une quelconque des revendications 1 à 7, caractérisé en ce que le catalyseur est dopé avec au moins un métal de transition des Groupes VII à X du Tableau Périodique des Eléments.

9. Procédé selon l'une quelconque des revendications 1 à 8, caractérisé en ce la polymérisation est réalisée en présence d'hydrogène.
